# EUROPÄISCHE PATENTSCHRIFT

(11) **EP 4 010 234 B1**
(45) Veröffentlichungstag und Bekanntmachung des Hinweises auf die Patenterteilung: **30.10.2024**
(21) Anmeldenummer: 20749841.1
(22) Anmeldetag: 28.07.2020
(51) Int. Cl.: B61L 25/02, G01P 3/50, B60T 8/17, B60T 8/172, B60W 40/105

(54) **VERFAHREN ZUR BESTIMMUNG EINER LOKALEN WAGENGESCHWINDIGKEIT EINES WAGENS**
METHOD FOR DETERMINING A LOCAL CARRIAGE SPEED OF A CARRIAGE
PROCÉDÉ DE DÉTERMINATION D'UNE VITESSE LOCALE D'UNE VOITURE

(30) Priorität: 08.08.2019 DE 102019211944
(43) Veröffentlichungstag der Anmeldung: 15.06.2022
(73) Patentinhaber: KNORR-BREMSE Systeme für Schienenfahrzeuge GmbH, 80809 München (DE)
(72) Erfinder: REHBERGER, Sebastian, 81675 München (DE); FRIESEN, Ulf, 85579 Neubiberg (DE); GÜNTHER, Frank, 80993 München (DE)
(86) Internationale Anmeldenummer: PCT/EP2020/071278
(87) Internationale Veröffentlichungsnummer: WO 2021/023584

(56) Entgegenhaltungen:
- EP-A1- 0 650 253
- EP-A1- 1 211 152
- US-B2- 9 517 780

## Beschreibung

Die Erfindung betrifft ein Verfahren zur Bestimmung einer Wagengeschwindigkeit eines Wagens sowie eines Zuges mit mindestens einem Wagen, eine Vorrichtung ausgebildet zur Durchführung des Verfahrens, einen Wagen mit dieser Vorrichtung sowie ein Com puterprogram m produkt.

Eine genaue Kenntnis einer Position, einer Geschwindigkeit und einer Verzögerung oder Beschleunigung von Schienenfahrzeugen ist Grundlage für eine Vielzahl von Verbesserungsmöglichkeiten von betrieblichen Abläufen im Schienenfahrzeugverkehr.

Jedoch sind gemessene Größen zur Bestimmung der Position, der Geschwindigkeit und der Verzögerung oder Beschleunigung, die mit vertretbarem Aufwand direkt gemessen werden, in vielen Fällen mit großen Messfehlern behaftet.

Bei einer Positionsermittlung mittels Satelliten, nämlich mittels eines globalen Satellitennavigationssystems (GNSS), wie etwa GPS, Galileo oder GLONASS, ist der wahren Position ein mittelwertfreies Messrauschen überlagert, deren Standardabweichung aus der Anzahl von empfangenen Satelliten abzuschätzen ist. Bei einer schlechten Empfangslage kann sich die Genauigkeit jedoch drastisch verringern, oder der Empfang kann, beispielsweise in einem Tunnel, vollständig ausfallen.

Eine Positionsermittlung mittels Zugbeeinflussungssystemen ist im Allgemeinen nur punktuell oder abschnittsweise möglich, und ist somit nicht für eine kontinuierliche Auswertung geeignet.

Ein Geschwindigkeitssignal aus dem sogenannten Gleitschutz, das entweder von einem Referenzradsatz zur Verfügung gestellt wird oder über mehrere oder alle Radsätze ermittelt wird, beispielsweise durch Mittelung, weist das Problem auf, dass eine systematische Messungenauigkeit aufgrund eines nicht genau bekannten Raddurchmessers, die sich über die Zeit langsam verändert, verursacht werden kann.

Weitere Messungenauigkeiten können durch einen über eine Kraftübertragung beim Bremsen oder Beschleunigen erzeugten Schlupf des Radsatzes entstehen. Durch einen nicht angetriebenen und ungebremsten Referenzradsatz, können zwar Messabweichungen durch den Schlupf minimiert werden, jedoch ist dies mit einem zusätzlichen Aufwand an Bauteilen und bei der Montage verbunden bzw. ein ungebremster Radsatz ist nicht erwünscht.

Eine Erfassung einer Längsbeschleunigung ist zwar aus Messsignalen von Impulsgebern, beispielsweise durch zeitliche Differentiation, kostengünstig möglich, jedoch auch ungenau aufgrund der Abtastrate. Ferner muss die erfasste Längsbeschleunigung um einen Erdbeschleunigungsanteil kompensiert werden. Werden zur Erfassung der Längsbeschleunigung Beschleunigungssensoren verwendet, muss dieser Fehler nicht kompensiert werden, jedoch können diese eine Drift aufweisen, welche aus Integration ermittelte Geschwindigkeiten und Wege erfahrungsgemäß stark verfälschen oder sogar unbrauchbar machen.

Eine Brems- oder Beschleunigungskraft lässt sich näherungsweise aus Zustandsgrößen eines Antriebs oder einer Bremse ermitteln. Jedoch ergeben sich, beispielsweise aus Unkenntnis eines genauen Reibwerts zwischen Bremsscheibe und Bremsbelag und eines genauen Kraftangriffspunkts oder auch der nichtidealen Kraftübertragung, Ungenauigkeiten bei der Ermittlung dieser Kräfte.

Dokument US 9 517 780 B2 offenbart ein Verfahren zur Bestimmung einer Wagengeschwindigkeit. Dabei werden in dem Wagen verfügbare Sensordaten als eine jeweilige Eingangsgröße für ein Beobachtermodell erfasst, die Eingangsgrößen in das Beobachtermodell eingegeben und eine kontinuierliche Ermittlung der Wagengeschwindigkeit durch das Beobachtermodell durchgeführt.

Der Erfindung liegt die Aufgabe zugrunde, eine Möglichkeit bereitzustellen, eine Geschwindigkeit eines Wagens sowie eines Schienenfahrzeugs, das aus mindestens einem Wagen besteht, möglichst zuverlässig aus den zur Verfügung stehenden Informationen zu bestimmen.

Diese Aufgabe wird durch die Gegenstände der unabhängigen Ansprüche gelöst. Vorteilhafte Weiterbildungen der Erfindung sind in den abhängigen Ansprüchen enthalten.

Erfindungsgemäß ist ein Verfahren zur Bestimmung einer Wagengeschwindigkeit eines Wagens vorgesehen, das die Schritte aufweist:
- Erfassen von in dem Wagen verfügbaren Sensordaten als eine jeweilige Eingangsgröße für ein Beobachtermodell;
- Eingeben der Eingangsgröße in das Beobachtermodell;
- Durchführen einer kontinuierlichen Ermittlung der Wagengeschwindigkeit durch das Beobachtermodell.

Unter "erfassen" kann hier sowohl die Messung entsprechender Größen als auch deren Bestimmung bzw. Berechnung aus anderen Größen verstanden werden. So kann beispielsweise eine Raddrehzahl erfasst werden indem sie gemessen wird. Andererseits kann eine Zuspannkraft einer Reibbremse erfasst werden, indem sie aus einem Bremsdruck berechnet wird.

Das Beobachtermodell ist bevorzugt als regelungstechnisches Beobachtermodell ausgebildet, wobei es in einer bevorzugten Ausführungsform als Luenberger-Beobachter oder Kalman-Filter ausgebildet ist.

Vorzugsweise enthalten die Sensordaten eine Längsbeschleunigung des Wagens und/oder eine Drehzahl eines Wagenelements, dessen Drehzahl proportional zu einer Raddrehzahl ist.

Das Wagenelement ist dabei vorzugsweise ein Rad, eine Achse des Wagens oder eine Welle eines Motors des Wagens, wobei der Proportionalitätsfaktor vorzugsweise ein Radradius, ein Übersetzungsverhältnis und/oder ein anderer Faktor ist, der dazu ausgebildet ist, aus der erfassten Drehzahl eine Umfangsgeschwindigkeit des Rades zu ermitteln, welche vorzugsweise als Radgeschwindigkeit verwendet wird.

Die Drehzahl wird dabei vorzugsweise mit einem Drehzahlsensor oder Impulsgeber erfasst.

Die Beschleunigung wird dabei vorzugsweise mit Beschleunigungssensoren, die vorzugsweise in Form eines MEMS (microelectromechanical systems) ausgeführt sind, und vorzugsweise in einem Inertialmesssystem verwendet werden.

Die Beschleunigung kann besonders bevorzugt aus einem hochpräzise ausgerichteten einachsigen Sensor erfasst werden, oder das Sensorsystem besitzt weitere Sensoren in orthogonalen Raumrichtungen und kann mit einem Kalibrierverfahren korrigiert werden.

Alternativ oder zusätzlich enthalten die Eingangsgrößen messbare oder, vorzugsweise mittels eines Beobachtermodells, indirekt bestimmte vom Brems- oder Antriebssysteme des Wagens eingeleitete Kräfte.

Diese Kräfte können beispielsweise ermittelt werden, indem Zuspannkräfte von Reibungsbremsen oder ein Antriebsmoment eines Motors bestimmt werden. Vorzugsweise handelt es sich dabei um Kräfte, die über das entsprechende Rad des Wagens, dessen Raddrehzahl verwendet wird, auf der Schiene abgestützt werden. So stehen physikalische Größen zur Verfügung, die einen Einfluss auf die Korrelation der Raddrehzahl mit der tatsächlichen Wagengeschwindigkeit darstellen.

Vorzugsweise verwendet das Beobachtermodell eine Geschwindigkeit und eine Beschleunigung des Wagens als Zustandsgrößen, wobei vorzugsweise die Geschwindigkeit die ermittelte Wagengeschwindigkeit ist und/oder die Beschleunigung eine Längsbeschleunigung des Wagens ist.

Gemäß einer speziellen Ausführungsform der Erfindung enthält ein Verfahren zur Bestimmung einer Wagengeschwindigkeit eines Wagens eines Schienenfahrzeugs die Schritte: Erfassen von lokal in dem Wagen verfügbaren geschwindigkeitsrelevanten Sensordaten als eine jeweilige Eingangsgröße für ein regelungstechnisches Beobachtermodell, Eingeben der Eingangsgrößen in das regelungstechnische Beobachtermodell; Durchführen einer kontinuierlichen Verarbeitung der Eingangsgrößen und Ermitteln von Zustandsgrößen durch das regelungstechnische Beobachtermodell, wobei eine der Zustandsgrößen vorzugsweise die Wagengeschwindigkeit ist.

Durch dieses Verfahren kann die Wagengeschwindigkeit aus den lokal verfügbaren Sensordaten genau und kontinuierlich ermittelt werden. Auf Grund der kontinuierlichen Ermittlung der lokalen Wagengeschwindigkeit kann diese, unabhängig von einem Fahrzustand, zuverlässig für beispielsweise einen Gleitschutz, eine Adhäsionsdetektion oder eine Neigungserkennung verwendet werden.

Unter kontinuierlicher Ermittlung ist in diesem Zusammenhang insbesondere zu verstehen, dass kein Umschalten zwischen unterschiedlichen Berechnungsmethoden aufgrund verschiedener Fahrzustände erfolgen muss. Beispielsweise wird bei schaltenden Verfahren in einen Modus gewechselt in dem keine Raddrehzahl bzw. Radgeschwindigkeit mehr verwendet wird, wenn das Rad schleudert oder blockiert. Stattdessen werden bei der kontinuierlichen Ermittlung immer dieselben gemessenen Größen zur Bestimmung der Wagengeschwindigkeit verwendet. Das erfindungsgemäße Verfahren ist vorzugsweise dazu ausgebildet, den Einfluss der entsprechenden Größen, wie der Beschleunigung bzw. der Längsbeschleunigung oder der Radgeschwindigkeit, auf die bestimmte Wagengeschwindigkeit selbst zu anzupassen.

Mit Hilfe des Beobachtermodells, das vorzugsweise als Simulationsmodell eines Systems funktioniert und in das, als Ausgangsgrößen des Systems, Messergebnisse von Sensoren als Eingangsgrößen des Beobachtermodells eingegeben werden können, können Zustandsgrößen bestimmt werden. Die Zustandsgrößen können beispielsweise genauere oder korrigierte Messergebnisse der Sensoren sein. Weiterhin können auch verborgene Zustandsgrößen bestimmt werden, die nicht oder nur mit großem Aufwand direkt zu messen sind. Die Zustandsgrößen werden mittels Gleichungen, insbesondere Differentialgleichungen, bestimmt, die ein Verhalten der Zustandsgrößen in Bezug auf jeweilige Eingangsgrößen, aber auch gegebenenfalls ein Verhalten der Zustandsgrößen zueinander definieren. Dadurch können durch eine Berücksichtigung von mehreren jeweils relevanten Messergebnissen auch bei einzelnen ungenauen oder fehlerhaften Messergebnissen durch eine Sensorfusion genaue Zustandsgrößen ermittelt werden. Darüber hinaus kann das Beobachtermodell in einer dazu bestimmten Ausprägung eigene Fehler beim Bestimmen der Zustandsgrößen abschätzen.

Zumindest ein Teil der Sensordaten wird vorzugsweise von an einer Fahrwerkseinheit, insbesondere einem Drehgestell, angeordneten Sensoren erfasst. Wenn die, insbesondere geschwindigkeitsrelevanten, Sensordaten vorteilhafterweise von an einer Fahrwerkseinheit, insbesondere einem Drehgestell, angeordneten Sensoren erfasst werden, können Einflüsse auf die Messergebnisse der Sensoren lokal berücksichtigt werden, um die lokale Geschwindigkeit als die Zustandsgröße genau zu bestimmen.

Die Sensordaten enthalten vorzugsweise Messerwerte
- eines Beschleunigungssensors,
- eines Neigungssensors
- einer Inertialmesseinheit,
- eines Drehzahlsensors,
- eines Bremsdrucksensors,
- eines Bremsstromsensors, und/oder
- eines Motors.

Diese Sensordaten werden vorzugsweise als Eingangsgrößen in das Beobachtermodell eingegeben.

Wenn die Sensordaten vorteilhafterweise Messergebnisse eines Beschleunigungssensors enthalten, kann die lokale Wagengeschwindigkeit durch ein Integrieren der Messergebnisse des Beschleunigungssensors über die Zeit bestimmt werden, wobei mittelwertfreie Fehler ohne Filterung und somit ohne Phasenverschiebung beseitigt werden können. Eine grundsätzliche vorhandene Drift der Beschleunigungssensoren kann über die Sensorfusion mit anderen geschwindigkeitsrelevanten Sensoren, beispielsweise einem Impulsgeber für eine Raddrehzahl kompensiert werden. Die Drift kann auch als Zustandsgröße (siehe unten) in dem Beobachtermodell verwendet werden.

Problematisch bei der Verwendung der Radumfangsgeschwindigkeit können Zustände sein, in denen das entsprechende Rad schleudert oder blockiert, also in denen die Raddrehzahl nicht mehr mit der tatsächlichen Wagengeschwindigkeit korreliert. Liegt ein solcher Zustand vor, kann durch die Verwendung einer solchen Radgeschwindigkeit, die aus der Raddrehzahl bestimmt wurde, ein Fehler in die Bestimmung der Wagengeschwindigkeit eingebracht werden. Daher müssen derartige Zustände erkannt werden und das Beobachtermodell muss entsprechend reagieren können.

Erfindungsgemäß wird eine Driftgröße ermittelt, wobei diese Ermittlung durch das Beobachtermodell erfolgt. Die Driftgröße wird als Zustandsgröße des Beobachtermodells ermittelt, wobei die Driftgröße als Betrag einer
- Differenz einer tatsächlichen Längsbeschleunigung des Wagens von der gemessenen Längsbeschleunigung, und/oder
- Differenz einer Längsbeschleunigung, die aus der Drehzahl, vorzugsweise aus der Raddrehzahl bestimmt wird, von der gemessenen Längsbeschleunigung, und/oder
- Differenz der Längsbeschleunigung, die aus der Drehzahl, vorzugsweise aus der Raddrehzahl bestimmt wird von der tatsächlichen Längsbeschleunigung
definiert ist.

Vorzugsweise wird eine Driftdynamik durch Ermittlung einer zeitlichen Änderungsrate der Driftgröße ermittelt, wobei bevorzugt der Betrag der Driftdynamik gegen vorbestimmte Maximalwerte verglichen wird und weiter vorzugsweise bei Überschreiten der vorbestimmten Maximalwerte durch den Betrag der Driftdynamik auf einen fehlerhaften Bereitstellungsvorgang der Drehzahl, insbesondere der Raddrehzahl, geschlossen wird, und die vorbestimmten Maximalwerte vorzugsweise Steigungs- und Neigungsänderungen über einem Streckenverlauf, Einbau- und Kalibrierfehler der verwendeten Beschleunigungssensoren und übliche Beschleunigungs- und Verzögerungsdynamiken des Zuges beinhalten.

Aus physikalischen Überlegungen für den Wagen oder einen Zug mit mehreren Wagen kann abgeschätzt werden, welche Größenordnung die Dynamik dieser Driftgröße maximal annehmen kann. Diese physikalischen Überlegungen schließen vor allem die Steigungs-/Neigungsänderung über dem Streckenverlauf sowie den Einbaufehler und Kalibrierfehler der verwendeten Beschleunigungssensoren und des Weiteren vom Zug abhängige übliche Beschleunigungs- und Verzögerungsdynamiken mit ein.

Diese Information kann genutzt werden, um ein Beobachtermodell geeignet zu parametrieren, so dass ohne Kenntnis diskreter Betriebszustände die optimale Berücksichtigung der gemessenen Größen, insbesondere der Radgeschwindigkeit, hinsichtlich der Ermittlung der tatsächlichen Wagengeschwindigkeit erfolgen kann.

Dadurch ergibt sich eine kontinuierliche Nachführung der Driftgröße und eine darauf ermöglichte kontinuierliche Plausibilisierung der Korrelation der Drehzahl bzw. der Raddrehzahl zu der aus der Raddrehzahl ermittelten Radgeschwindigkeit.

Vorzugsweise erfolgt eine Gewichtung zumindest einer der Eingangsgrößen kontinuierlich auf Basis eines Bewertungskriteriums, um den Einfluss dieser Eingangsgröße in dem Beobachtermodell anzupassen. Die Gewichtung kann in einer speziellen Ausführungsform auch komplett auf Null heruntergefahren werden, so dass kein Einfluss der entsprechenden Eingangsgröße im Beobachtermodell wirksam ist. Vorzugsweise wird jedoch der Einfluss mittels der Gewichtung lediglich verringert. Bevorzugt wird dabei die gemessene Drehzahl, Raddrehzahl oder die daraus ermittelte Radgeschwindigkeit gewichtet.

Vorzugsweise wird ein Kalman-Filter als das Beobachtermodell verwendet. Dabei wird weiter bevorzugt eine Varianz eines Messrauschens zumindest einer der Eingangsgrößen des Beobachtermodells angepasst. Auf diese Weise kann die Varianz des Messrauschens, also das Vertrauensmaß, welches anzeigt, wie gut ein Messwert der Realität entspricht, beeinflusst werden, so dass auch hier ein Einfluss der entsprechenden Eingangsgröße reduziert werden kann. Die Veränderung der Varianz kann in einer speziellen Ausführungsform so verändert werden, dass kein Einfluss der entsprechenden Eingangsgröße im Beobachtermodell wirksam ist. Vorzugsweise wird jedoch der Einfluss hierdurch lediglich verringert. Bevorzugt ist davon die gemessene Drehzahl, Raddrehzahl oder die daraus ermittelte Radgeschwindigkeit betroffen.

Vorzugsweise erfolgt die Anpassung des Wertes der Varianz des Messrauschens zumindest einer der Eingangsgrößen oder die Gewichtung zumindest einer der Eingangsgrößen in Abhängigkeit einer Kenngröße, die sich aus Antriebs- und/oder Bremsvorgängen des Wagens ergibt. Liegt beispielsweise ein starke Antriebskraft an dem Rad an, woraus sich ein relativ hoher Radschlupf ergibt, so wird die Gewichtung der Radgeschwindigkeit, also der Geschwindigkeit, die aus der Raddrehzahl berechnet wurde, reduziert bzw. die Varianz des Messrauschen der Radgeschwindigkeit auf einen Wert verändert, der einem niedrigen Vertrauensmaß entspricht. Auf diese Weise kann der Einfluss der Radgeschwindigkeit als einer Eingangsgröße in diesem Fall reduziert werden.

Vorzugsweise ist eine der Eingangsgrößen des Beobachtermodells die Raddrehzahl und/oder es wird eine Eingangsgröße aus der Raddrehzahl bestimmt. Vorzugsweise wird aus der Raddrehzahl eine Radgeschwindigkeit bestimmt und die Radgeschwindigkeit ist besonders bevorzugt ebenfalls eine der Eingangsgrößen des Beobachtermodells.

Ferner ist das Beobachtermodell bevorzugt zur Abbildung von Beschleunigungs- und Bremsvorgängen ausgebildet, wodurch eine genaue Beobachtung der tatsächlichen Fahrgeschwindigkeit ermöglicht wird. Dazu ist das Beobachtermodell insbesondere ausgebildet, auf den Wagen wirkende Antriebs- und Bremskräfte zu bestimmen. Dies kann vorzugsweise durch Verarbeitung von Messwerten, wie beispielsweise von Strömen von Antriebsmotoren oder elektrodynamischen Bremsen, von Zuspannkräften bzw. Bremsdrücken von Reibungsbremsen oder ähnlichen Werten erfolgen.

In einer bevorzugten Ausführungsform werden eine Geschwindigkeit, eine Beschleunigung und eine Abweichung eines Mittelwerts einer gemessenen Beschleunigung von einer auf eine Bewegung der Fahrzeugmasse bezogenen Beschleunigung als Zustandsgrößen ermittelt. Die Beschleunigungen sind dabei insbesondere Längsbeschleunigungen.

Der Kalman-Filter ist ein regelungstechnisches Beobachtermodell, das eine spezielle mathematische Struktur aufweist, die den Einsatz in Echtzeitsystemen ermöglicht. Neben den Zustandsgrößen schätzt der Kalman-Filter auch seinen eigenen Fehler ab.

Wenn die geschwindigkeitsrelevanten Sensordaten vorteilhafterweise Messergebnisse eines Raddrehzahlsensors enthalten, und eine Varianz eines Messrauschens der Zustandsgröße Geschwindigkeit über die Zeit variabel angepasst wird, kann die Varianz als Vertrauensmaß für eine aus einer Raddrehzahl gewonnenen Geschwindigkeit betrachtet werden.

Bei einem vorteilhaften Anpassen eines Werts der Varianz proportional zu einer Differenz eines angeforderten und tatsächlich realisierten Brems- oder Antriebswerts oder proportional zu einem Faktor, der aus mindestens einem des angeforderten und tatsächlich realisierten Brems- und Antriebswerts bestimmt wird, kann die Varianz als Vertrauensmaß für einen Geschwindigkeitswert betrachtet werden. Die Brems- oder Antriebswerte können verschiedenste mess- oder beobachtbare Werte sein, die den Zustand des Fahrzeugs beim Antreiben, Rollen, Bremsen sowie Stillstand charakterisieren. Charakteristische Größen sind gemessene, intern berechnete oder beobachtbare Größen aus der Zug-, Antriebs- und Bremssteuerung, wie z.B. Bremsdrücke, Motor- oder Umrichterströme, Beschleunigungswerte, Schlupfwerte, oder Anforderungswerte durch eine Antriebs- oder Bremshebelstellung sein.

Wenn die Eingangsgrößen vorteilhafterweise messbare von außen in den Wagen eingeleitete Kräfte enthalten, ist eine Vorausberechnung von resultierenden Zustandsänderungen möglich.

Neben den oben beschriebenen Ungenauigkeiten die sich durch Abweichungen zwischen Raddrehzahl und tatsächlicher Wagengeschwindigkeit ergeben können, können auch Ungenauigkeiten in der gemessenen Beschleunigung ein Problem bei der Geschwindigkeitsermittlung darstellen. Dies ist insbesondere dann der Fall, wenn der Wagen eine Steigung oder ein Gefälle, also eine Strecke mit einem Steigungswert ungleich Null befährt. Daher müssen derartige Situationen erkannt werden und das Beobachtermodell muss entsprechend reagieren können.

Vorzugsweise wird ein Steigungswert bestimmt, der bevorzugt eine der Eingangsgrößen des Beobachtermodells darstellt, wobei der Steigungswert vorzugsweise gemessen und/oder abgeschätzt und/oder aus einer Datenbasis bestimmt wird, wobei besonders bevorzugt der Steigungswert zur Korrektur der gemessenen Längsbeschleunigung verwendet wird. Der Steigungswert beschreibt die Steigung der Strecke auf der sich der Wagen bewegt. Der Steigungswert kann beispielsweise als Winkel oder in Prozent angegeben werden. So kann ein Beschleunigungsanteil in der gemessenen Längsbeschleunigung ausgemacht werden, der aufgrund der ermittelten Steigung zu erwarten ist. Dieser Beschleunigungsanteil kann dann zur Korrektur der gemessenen Längsbeschleunigung verwendet werden.

Der Wagen weist insbesondere eine Längsrichtung auf in die er fährt.

Vorzugsweise wird eine Vertikalbeschleunigung in einer Hochrichtung des Wagens senkrecht zu der Längsrichtung erfasst, und die gemessene Längsbeschleunigung durch die Vertikalbeschleunigung korrigiert. Alternativ oder zusätzlich ist die Vertikalbeschleunigung eine Eingangsgröße des Beobachtermodells, wobei vorzugsweise eine Korrektur der Längsbeschleunigung durch die Vertikalbeschleunigung im Beobachtermodell erfolgt.

Alternativ oder zusätzlich wird eine Fahrzeugneigung um eine horizontale Achse senkrecht zu der Längsachse und senkrecht zu der Hochachse als eine der Zustandsgrößen des Beobachtermodells verwendet, wobei für eine Bestimmung der Fahrzeugneigung erforderliche Messgrößen vorzugsweise als Eingangsgrößen in das Beobachtermodell eingegeben werden, wobei insbesondere die Vertikalbeschleunigung eingegeben wird. So kann aus der bestimmten Vertikalbeschleunigung eine Fahrzeugneigung bestimmt werden, wobei die Fahrzeugneigung ähnlich wie zuvor die bestimmte Steigung, zur Korrektur der gemessenen Längsbeschleunigung verwendet werden kann.

Bei einer vorteilhaften Erfassung einer Beschleunigung in einer Richtung senkrecht zu einer Längsrichtung des Wagens in einer vertikalen Ebene, und einem Korrigieren der Daten des Beschleunigungssensors, insbesondere der erfassten Längsbeschleunigung, durch die Beschleunigung in der Richtung senkrecht zu der Längsrichtung des Wagens, wird die Zustandsbeobachtung nicht durch die Drift in der Beschleunigungsmessung beeinflusst.

Wenn die Beschleunigung in der Richtung senkrecht zu der Längsrichtung des Wagens in der vertikalen Ebene erfasst wird, und die Beschleunigung senkrecht zu der Längsrichtung des Wagens in der vertikalen Ebene vorteilhafterweise eine der Eingangsgrößen des Beobachtermodells ist, wird die Zustandsbeobachtung nicht durch die Drift in der Beschleunigungsmessung beeinflusst.

Wenn vorteilhafterweise eine Fahrzeugneigung um eine horizontale Achse senkrecht zu der Längsachse eine der Zustandsgrößen ist, und für eine Bestimmung der Fahrzeugneigung erforderliche Messgrößen als Eingangsgrößen eingegeben werden, wird die Zustandsbeobachtung nicht durch die Drift in der Beschleunigungsmessung beeinflusst.

Wenn vorteilhafterweise eine der für die Bestimmung der Fahrzeugneigung erforderlichen Messgrößen eine Beschleunigung in der Richtung senkrecht zu der Längsrichtung in der vertikalen Ebene eine Eingangsgröße des Beobachtermodells ist, kann der Einfluss der Fahrzeugneigung einfach erfasst werden.

Für das gesamte Dokument sei hier angemerkt, dass eine Weiterverarbeitung der gemessenen Längsbeschleunigung sowohl im korrigierten Zustand, wie oben beschrieben, als auch im nicht korrigierten Zustand erfolgen kann.

Zur Bewertung der Radgeschwindigkeit, insbesondere zur Einschätzung, in welchem Maße die Radgeschwindigkeit weiter verwendet werden kann, weist das Verfahren vorzugsweise einen weiteren Schritt auf:
- Bestimmen einer Qualität der ermittelten Radgeschwindigkeit, wobei
die Qualität vorzugsweise als Kennwert unter Berücksichtigung mindestens einer der folgenden Größen gebildet wird:
- einem Bremsdruck und/oder eine Zuspannkraft einer Bremse, die zur Bremsung des Rades ausgebildet ist;
- einem Strom und/oder einer Spannung einer Vorrichtung, die dazu ausgebildet ist, dem Rad ein Moment aufzuprägen;
- einem auf das Rad aufgebrachten Antriebs- oder Bremsmoment;
- einer Gewichtskraft des Wagens, welche durch eine Lasterfassung ermittelt wird;
- einem Radschlupf des Rades;
- einer Referenzgeschwindigkeit und/oder einer Wagengeschwindigkeit;
- einem Reibwert zwischen dem Rad und einer Oberfläche auf der das Rad rollt;
- der erfassten Beschleunigung;
- einem auf das Rad aufgebrachten Antriebs- oder Bremsmoment;
- einer globalen Fahrzeuggeschwindigkeit, die insbesondere aus einem Satellitennavigationssystem bestimmt wird;
- einer Information, ob ein Gleitschutzeingriff vorliegt;
- einer Information, ob ein Bremseingriff vorliegt;
- einer Information, ob das entsprechende Rad angetrieben wird.

Eine geringe Qualität der Radgeschwindigkeit ist vorzugsweise dann gegeben, wenn die erfasste Drehzahl bzw. die daraus bestimmte Radgeschwindigkeit nicht mit der tatsächlichen Wagengeschwindigkeit korreliert und/oder von einem Referenzwert, wie eben einer Referenzgeschwindigkeit, abweicht. Dies ist insbesondere dann der Fall, wenn das Rad schleudert oder blockiert, also wenn das Rad ein aufgeprägtes Antriebs- oder Bremsmoment nicht vollständig auf eine Oberfläche, auf der das Rad rollt, übertragen kann. Die dann bestimmte Radgeschwindigkeit kann nicht mehr zuverlässig für die weitere Bestimmung der Wagengeschwindigkeit verwendet werden, so dass in der Folge dazu bevorzugt der Einfluss der Radgeschwindigkeit auf die Bestimmung der Wagengeschwindigkeit reduziert wird und dass besonders bevorzugt im Wesentlichen die Wagengeschwindigkeit aus der erfassten Beschleunigung bestimmt wird.

Vorzugsweise wird die Qualität der Radgeschwindigkeit als Kennwert bestimmt. Dessen Bestimmung ist vorzugsweise so gestaltet, dass der Kennwert sich zu einem Wert verändert, der einer schlechteren Qualität entspricht, wenn ein Bremseingriff stattfindet. Alternativ oder zusätzlich erfolgt eine Veränderung des Kennwertes hin zu einem Wert, der einer schlechteren Qualität entspricht, wenn ein Gleitschutzeingriff erfolgt. Alternativ oder zusätzlich erfolgt eine Veränderung des Kennwertes hin zu einem Wert, der einer schlechteren Qualität entspricht, wenn eine Abweichung der erfassten Radgeschwindigkeit von der Referenzgeschwindigkeit einen vorbestimmten Wert über- bzw. unterschreitet.

Der Kennwert der Qualität wird vorzugsweise so bestimmt, dass er, ausgehend von einer bestimmten Wagengeschwindigkeit, bei einem Zustand in dem der Wagen frei rollt, also weder angetrieben noch gebremst wird, einen Wert annimmt, der einer höheren Qualität entspricht, verglichen mit Zuständen bei denen der Wagen angetrieben oder gebremst wird.

In einer besonderen Ausführungsform wird eine Referenzgeschwindigkeit entsprechend dem Verfahren, das in der EP 0 499 947 A1 offenbart ist (Referenzgeschwindigkeit des Gleitschutzes), gebildet.

Vorzugweise wird die Referenzgeschwindigkeit derart gebildet, dass aus sämtlichen Antriebs- oder Bremsgrößen bzw. Antriebs- oder Bremskräften, die auf den Wagen bzw. das Rad wirken, dessen Drehzahl erfasst wird, eine theoretische Geschwindigkeit des Wagens, eben die Referenzgeschwindigkeit, gebildet wird, wobei angenommen wird, dass eine optimale Übertragung der Antriebs- oder Bremskräfte auf die Schiene erfolgt. Dies bedeutet, dass die Referenzgeschwindigkeit damit einer theoretisch möglichen Geschwindigkeit des Wagens entspricht, falls das entsprechende Rad nicht schlupfen oder schleudern sollte. Dabei wird in der Ermittlung der Referenzgeschwindigkeit der Einfluss der Trägheit des Wagens mit berücksichtigt. Vorzugsweise wird dabei die Trägheit aus der Masse des Wagens berücksichtigt. Besonders bevorzugt wird zudem eine rotatorische Trägheit von rotierenden Elementen des Wagens, wie z.B. den Rädern, mit berücksichtigt.

So kann vorteilhafterweise die Qualität der ermittelten Radgeschwindigkeit rein aus einem Vergleich der Referenzgeschwindigkeit mit der tatsächlichen Radgeschwindigkeit bestimmt werden. Wird der Wagen angetrieben, so drohen die Räder zu schleudern. Sie würden sich also schneller drehen, als es die Wagenträgheit zulassen würde. Die Radgeschwindigkeit wäre in diesem Fall höher als die entsprechende Referenzgeschwindigkeit. Wird der Wagen gebremst, so drohen die Räder zu blockieren. Sie würden sich also langsamer drehen, als es die Wagenträgheit zulassen würde, da der Wagen durch seine Trägheit die Räder weiter "anschiebt". Die Radgeschwindigkeit wäre in diesem Fall niedriger als die entsprechende Referenzgeschwindigkeit. In beiden Fällen kann durch Bildung einer Differenz der Beträge von Rad- und Referenzgeschwindigkeit eine Qualität der Radgeschwindigkeit bestimmt werden. Ist die Differenz klein oder sogar gleich Null, so liegt die Radgeschwindigkeit nahe bei der tatsächlichen Geschwindigkeit des Wagens oder sie entspricht dieser vollständig. Alternativ oder zusätzlich kann auch eine prozentuale Abweichung oder eine andere Möglichkeit, die Rad- mit der Referenzgeschwindigkeit zu vergleichen, vorgesehen sein.

Die Referenzgeschwindigkeit kann auch vorzugsweise aus mindestens zwei der ermittelten Radgeschwindigkeiten gebildet werden. Die Referenzgeschwindigkeit ist vorzugsweise dazu geeignet, durch Vergleich mit einzelnen Radgeschwindigkeiten nicht plausible Radgeschwindigkeiten, bzw. eine geringe Qualität einer Radgeschwindigkeit zu identifizieren.

Ferner ist auch vorstellbar, mehrere Referenzgeschwindigkeiten, die auf unterschiedliche Weise ermittelt werden, zu verwenden.

Vorzugsweise wird die Varianz des Messrauschens zumindest einer der Eingangsgrößen und/oder die Gewichtung zumindest einer der Eingangsgrößen durch Überschreiten oder Unterschreiten eines Grenzwertes durch die Qualität, insbesondere durch den Kennwert, beeinflusst. Somit kann durch entsprechende Berechnung der Qualität der Radgeschwindigkeit der Einfluss der Radgeschwindigkeit auf die Bestimmung der Wagengeschwindigkeit bzw. auf das Beobachtermodell verändert werden.

Erfindungsgemäß ist ferner ein Verfahren zum Bestimmen einer Zuggeschwindigkeit eines Zuges mit mindestens einem Wagen vorgesehen mit den Schritten:
- Bestimmen von mindestens einer Wagengeschwindigkeit eines Wagens, der einem Zug mit mindestens einem Wagen angehört nach dem oben beschriebenen Verfahren, und
- Bestimmen einer Zuggeschwindigkeit aus der mindestens einer Wagengeschwindigkeit, vorzugsweise durch Mittelung der mindestens einen Wagengeschwindigkeit;
- vorzugsweise Durchführen einer Plausibilitätsüberprüfung der mindestens einen Wagengeschwindigkeit, insbesondere durch eine Diagnosefunktion, welche die Plausibilität von einzelnen der mindestens einen Wagengeschwindigkeit überprüft; und
- vorzugsweise Ignorieren von nicht plausiblen, insbesondere lokalen, Wagengeschwindigkeiten für die Bestimmung der Zuggeschwindigkeit, und/oder
- vorzugsweise Ignorieren von Wagengeschwindigkeiten, die auf Basis von Radgeschwindigkeiten mit einer Qualität bestimmt wurden, die unter einem vorbestimmten Qualitätsniveau liegen.

Vorzugsweise wird ein Kalman-Filter als das Beobachtermodell für die Ermittlung der mindestens einen Wagengeschwindigkeit verwendet, wobei eine Varianz eines Messrauschens in dem Kalman-Filter als Maß eines Vertrauens für die Überprüfung der Plausibilität der lokalen Wagengeschwindigkeit bestimmt wird, und bei einer Unterschreitung eines Mindestmaßes des Vertrauens einer der lokalen Wagengeschwindigkeiten, die zugehörige Raddrehzahl oder die zugehörige Radgeschwindigeit als Eingangsgröße ignoriert wird.

Durch das Ignorieren von Wagengeschwindigkeiten, die in ihrer Berechnung Radgeschwindigkeiten aufweisen, deren Qualität unter einem bestimmten Wert liegt, kann die Berechnung der Zuggeschwindigkeit insgesamt verbessert werden, indem diese Wagengeschwindigkeiten ignoriert werden. Somit ist vorteilhafterweise sichergestellt, dass Wagengeschwindigkeiten in die Berechnung mit einbezogen werden, die auf Basis von Radgeschwindigkeiten mit hoher Qualität bestimmt wurden.

Vorzugsweise weist das Verfahren zur Ermittlung der Zuggeschwindigkeit folgenden Schritt auf:
- Abgleichen oder Korrigieren der bestimmten Zuggeschwindigkeit mit einer aus anderen Quellen gebildeten Zuggeschwindigkeit, wobei eine andere Quelle vorzugsweise eine Radarmessung, eine GPS-Messung oder eine beschleunigungs- und/oder geschwindigkeitsunabhängige Messung ist, wobei das Abgleichen oder Korrigieren vorzugsweise mittels Fusion unter Einsatz eines Kalman-Filters erfolgt.

Gemäß einem weiteren Aspekt der Erfindung enthält ein Verfahren zum Bestimmen einer Zuggeschwindigkeit vorteilhafterweise den Schritt zur Ermittlung einer Zuggeschwindigkeit aus mehreren lokalen Wagen- oder Radgeschwindigkeiten, z.B. durch Bildung des arithmetischen Mittels. Dadurch kann die Zuggeschwindigkeit aus den bestimmten lokalen Wagengeschwindigkeiten einfach bestimmt werden.

Bei einem vorteilhaften Durchführen einer Diagnosefunktion durch Überprüfen einer Plausibilität der einzelnen lokalen Wagengeschwindigkeiten und Ignorieren von nicht plausiblen lokalen Wagengeschwindigkeiten für die Bestimmung der Zuggeschwindigkeit kann die Genauigkeit der bestimmten Zuggeschwindigkeit erhöht werden.

Wenn vorteilhafterweise ein Kalman-Filter als das Beobachtermodell für eine lokale Wagen- oder Radgeschwindigkeit verwendet wird, für die Überprüfung der Plausibilität eine Varianz eines Messrauschens in dem Kalman-Filter als Maß eines Vertrauens bestimmt wird und bei einer Unterschreitung eines Mindestmaßes des Vertrauens der aus der zugehörigen Raddrehzahl gewonnene Geschwindigkeitswert ignoriert wird, kann die Genauigkeit der bestimmten Zuggeschwindigkeit ebenfalls erhöht werden.

In dem Fall, in dem vorteilhafterweise ein Abgleichen der bestimmten Zuggeschwindigkeit mit einer aus anderen Quellen gebildeten Zuggeschwindigkeit erfolgt, kann die Genauigkeit der bestimmten Zuggeschwindigkeit erhöht werden.

Erfindungsgemäß ist ferner eine Vorrichtung zur Bestimmung einer Wagengeschwindigkeit oder einer Zuggeschwindigkeit vorgesehen, die dazu ausgebildet ist, das Verfahren zur Ermittlung der Wagen- oder der Zuggeschwindigkeit, wie oben beschrieben, durchzuführen.

Erfindungsgemäß ist ferner ein Fahrzeug, insbesondere ein Schienenfahrzeug, insbesondere aufweisend mindestens einen Wagen, vorgesehen, wobei das Fahrzeug zur Durchführung des Verfahrens zur Ermittlung der Wagen- oder der Zuggeschwindigkeit, wie oben beschrieben, ausgebildet ist, und/oder wobei das Fahrzeug eine Vorrichtung wie oben beschrieben aufweist.

Erfindungsgemäß ist ferner ein Computerprogrammprodukt mit Codemitteln, die auf einem maschinenlesbaren Träger gespeichert sind und die eine

Datenverarbeitungsvorrichtung, vorzugsweise eine oben beschriebene Vorrichtung, dazu veranlassen, das Verfahren zur Ermittlung der Wagen- oder der Zuggeschwindigkeit, wie oben beschrieben, durchzuführen, wenn die Codemittel auf der Datenverarbeitungsvorrichtung ausgeführt werden.

Die Erfindung wird nun mittels Ausführungsformen unter Bezugnahme auf die beigefügten Zeichnungen erläutert.

Insbesondere zeigen
- Fig. 1: eine schematische Darstellung eines Beobachtermodells zur Bestimmung einer lokalen Wagengeschwindigkeit mit einem Verfahren gemäß einer ersten Ausführungsform der Erfindung;
- Fig. 2: eine schematische Darstellung eines Beobachtermodells zur Bestimmung einer lokalen Wagengeschwindigkeit mit einem Verfahren gemäß einer zweiten Ausführungsform der Erfindung;
- Fig. 3: eine schematische Darstellung eines Beobachtermodells zur Bestimmung einer lokalen Wagengeschwindigkeit mit einem Verfahren gemäß einer dritten Ausführungsform der Erfindung;
- Fig. 4: eine schematische Darstellung eines Beobachtermodells zur Bestimmung einer lokalen Wagengeschwindigkeit mit einem Verfahren gemäß einer vierten Ausführungsform der Erfindung;
- Fig. 5: eine schematische Darstellung eines Beobachtermodells für ein erfindungsgemäßes Verfahren zur Sensordatenfusion für einzelne lokale Wagengeschwindigkeiten;
- Fig. 6: eine Prinzipskizze eines Aufbaus für das Verfahren gemäß der zweiten Ausführungsform der Erfindung; und
- Fig. 7: zeigt ein Schaubild einer Berechnung einer Qualität der Radgeschwindigkeit.

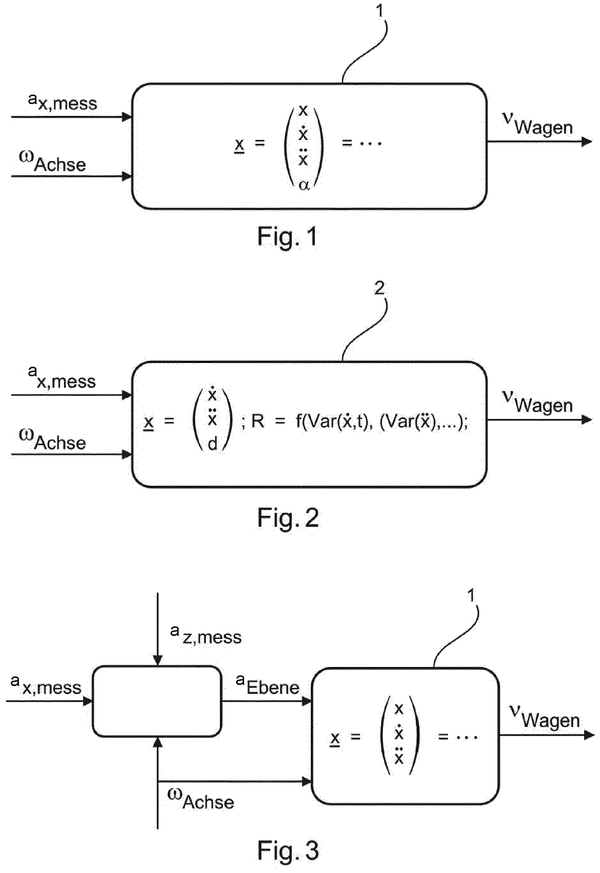

**Fig. 1** zeigt eine schematische Darstellung eines Beobachtermodells 1 zur Bestimmung einer lokalen Wagengeschwindigkeit v_{Wagen} mit einem Verfahren gemäß einer ersten Ausführungsform der Erfindung.

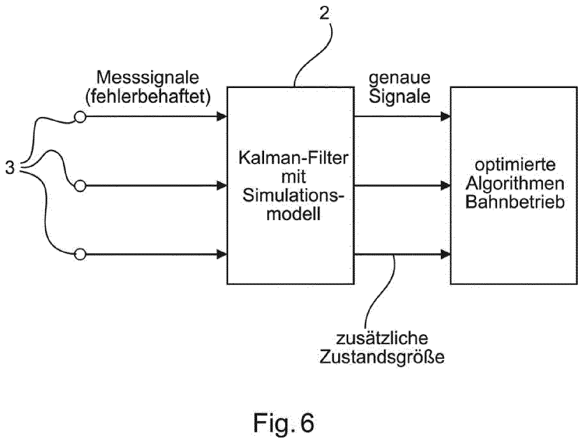

Durch das als Simulationsmodell eines Systems einer Fahrwerkseinheit, insbesondere eines Drehgestells eines Wagens eines Schienenfahrzeugs, funktionierende regelungstechnische Beobachtermodell 1, in das Messergebnisse von an der Fahrwerkseinheit bzw. dem Drehgestell angeordneten Sensoren 3 (Fig. 6) als Ausgangsgrößen des Systems als Eingangsgrößen eingeben werden, werden Zustandsgrößen bestimmt. Alternativ kann das System auch einer der Wagen des Schienenfahrzeugs sein, wobei die Sensoren 3 dann nicht zwingend an der Fahrwerkseinheit bzw. dem Drehgestell angeordnet sind, sondern an einer geeigneten Stelle am Wagen vorgesehen sind.

Die Zustandsgrößen können beispielsweise genauere oder korrigierte Messergebnisse der Sensoren 3 sein. Weiterhin können auch verborgene Zustandsgrößen bestimmt werden, die nicht oder nur mit großem Aufwand zu messen sind. Die Zustandsgrößen werden mittels Gleichungen, insbesondere Differentialgleichungen, bestimmt, die ein Verhalten der Zustandsgrößen in Bezug auf jeweilige Eingangsgrößen, aber auch ein Verhalten der Zustandsgrößen zueinander definieren. Dadurch können auch bei einzelnen ungenauen oder fehlerhaften Messergebnissen, durch eine Berücksichtigung von mehreren jeweils relevanten Messergebnissen, mittels einer Sensorfusion genaue Zustandsgrößen ermittelt werden.

Das Beobachtermodell 1 kann optional ein Kalman-Filter 2 (Fig. 2) sein, der auch eigene Fehler beim Bestimmen der Zustandsgrößen abschätzen kann.

Die eingegebenen Eingangsgrößen enthalten eine von einem Beschleunigungssensor erfasste Längsbeschleunigung a_{x,mess} des Wagens und eine Raddrehzahl bzw. Winkelgeschwindigkeit ω_{Achse} einer Achse des Rads. Statt einer Winkelgeschwindigkeit ω_{Achse} kann auch eine Drehzahl n, speziell eine Raddrehzahl n_{Rad} oder eine Radgeschwindigkeit v_{Odo}, die beispielsweise aus der Raddrezhal n_{Rad} und dem Radradius bestimmt wurde, eingegeben werden.

Eine Zustandsgröße, die in dem Beobachter bestimmt wird, ist die lokale Wagengeschwindigkeit v_{Wagen}. Alternativ können weitere Zustandsgrößen, wie etwa eine Beschleunigung oder eine Drift d bestimmt werden und ggf. ausgegeben werden.

Der Wagen hat eine Längsrichtung und weist einen Beschleunigungssensor auf, der eine Beschleunigung a_{z,mess} in einer Richtung senkrecht zu der Längsrichtung in einer vertikalen Ebene erfasst.

Im Betrieb werden die lokal in dem Wagen verfügbaren geschwindigkeitsrelevanten Sensordaten als die jeweilige Eingangsgröße für das Beobachtermodell 1 erfasst und in das Beobachtermodell 1 eingegeben. Die Sensordaten enthalten die Daten des Beschleunigungssensors für die Längsbeschleunigung a_{x,mess} des Wagens und die Raddrehzahl bzw. Winkelgeschwindigkeit ω_{Achse} der Achse des Rads. Durch das Beobachtermodell 1 wird eine kontinuierliche Zustandsbeobachtung der Eingangsgrößen und ein Ermitteln der Zustandsgröße, nämlich der lokalen Wagengeschwindigkeit v_{Wagen}, durchgeführt. Kontinuierlich bedeutet in diesem Zusammenhang, dass nicht zwischen unterschiedlichen Betriebsmodi, in den jeweils unterschiedliche Eingangsgrößen ausgewertet werden, umgeschaltet wird. Alternativ werden weitere geschwindigkeitsrelevante Sensordaten, wie beispielsweise Daten eines Verortungssystems, z.B. mittels eines Satellitennavigationssystems, Bremsdrücke oder Versorgungsspannungen oder Versorgungsströme von Antriebsmotoren, bereitgestellt.

Die geschwindigkeitsrelevanten Sensordaten werden von den an der Fahrwerkseinheit bzw. dem Drehgestell angeordneten Sensoren erfasst. Alternativ werden die Sensordaten von Sensoren, die an der geeigneten Stelle am Wagen angeordnet sind, erfasst. Es können weiterhin auch Sensordaten von anderen Sensoren als dem Beschleunigungssensor und einem Impulsgeber für die Raddrehzahl bzw. die Winkelgeschwindigkeit der Achse erfasst werden.

Eine Beschleunigung a_{z,mess} in einer Richtung senkrecht zu der Längsrichtung des Wagens in einer vertikalen Ebene wird erfasst und die Daten des Beschleunigungssensors für die Beschleunigung a_{x,mess} in der Längsrichtung werden durch die Beschleunigung a_{z,mess} in der vertikalen Ebene senkrecht zu der Längsrichtung korrigiert und eingegeben. Alternativ werden die Daten für die Beschleunigung a_{x,mess} in der Längsrichtung nicht durch die Beschleunigung a_{z,mess} in der vertikalen Ebene senkrecht zu der Längsrichtung korrigiert, sondern die Beschleunigung a_{z,mess} senkrecht zu der Längsrichtung des Wagens in der vertikalen Ebene ist eine Eingangsgröße des Beobachtermodells.

Alternativ kann die Drehung des Koordinatensystems des Wagens um den Winkel der Steigung und Neigung des Höhenprofils und damit der Korrekturwert der in der Fahrzeuglängsebene zu bestimmenden Fahrgeschwindigkeit auch durch weitere Verfahren bestimmt werden.

**Fig. 2** zeigt eine schematische Darstellung eines Beobachtermodells als Kalman-Filter 2 zur Bestimmung der lokalen Wagengeschwindigkeit v_{Wagen} mit einem Verfahren gemäß einer zweiten Ausführungsform der Erfindung.

Das Beobachtermodell in der zweiten Ausführungsform unterscheidet sich von dem Beobachtermodell 1 in der ersten Ausführungsform darin, dass es zwingend ein Kalman-Filter 2 oder ein regelungstechnisches Beobachtermodell, das eine Funktionalität des Kalman-Filters enthält, ist und das als ein für einen Beschleunigungs- und Bremsvorgang spezialisiertes regelungstechnischen Beobachtermodell ausgebildet ist.

Im Betrieb werden eine Geschwindigkeit des Wagens v_{Wagen}, eine Beschleunigung des Wagens und eine Drift, nämlich eine systematische Abweichung einer gemessenen Beschleunigung von einer auf eine Bewegung der Fahrzeugmasse des Wagens bezogenen Beschleunigung, als Zustandsgrößen bestimmt, was zu einer genauen Beobachtung der tatsächlichen Fahrgeschwindigkeit führt.

Die geschwindigkeitsrelevanten Sensordaten enthalten Messergebnisse eines Raddrehzahlsensors ω_{Achse}, und eine Varianz Var(X,t) eines Messrauschens der Zustandsgröße Geschwindigkeit wird über die Zeit variabel angepasst.

Optional wird ein Wert der Varianz Var(x,t) proportional zu einer Differenz eines angeforderten und tatsächlich realisierten Brems- oder Antriebswerts oder proportional zu einem Faktor, der aus mindestens einem der angeforderten und tatsächlich realisierten Brems- und Antriebswerte, wie oben erläutert, bestimmt wird, angepasst.

**Fig. 3** zeigt eine schematische Darstellung des Beobachtermodells 1 zur Bestimmung der lokalen Wagengeschwindigkeit v_{Wagen} mit einem Verfahren gemäß einer dritten Ausführungsform der Erfindung.

Das Verfahren gemäß der dritten Ausführungsform unterscheidet sich von dem Verfahren gemäß der ersten Ausführungsform darin, dass eine Fahrzeugneigung α um eine horizontale Achse senkrecht zu der Längsachse des Fahrzeugs eine der Zustandsgrößen ist, und für eine Bestimmung der Fahrzeugneigung erforderliche Messgrößen als Eingangsgrößen eingegeben werden.

Die für die Bestimmung der Fahrzeugneigung α zusätzlich zu der Beschleunigung a_{x,mess} in der Längsrichtung erforderliche Messgröße ist eine Beschleunigung a_{z,mess} in einer Hochrichtung senkrecht zu der Längsrichtung, um die Fahrzeugneigung α zu bestimmen. Alternativ können auch andere geeignete Messgrößen zur Bestimmung der Fahrzeugneigung, beispielsweise ein Messergebnis eines Gyroskops oder Neigungsmessers oder auch durch Kombination einer bekannten Topographie eines Streckenabschnitts mit einer Positionsbestimmungsmethode, beispielsweise durch Abgleich der aktuellen Position mit digitalem Kartenmaterial, verwendet werden.

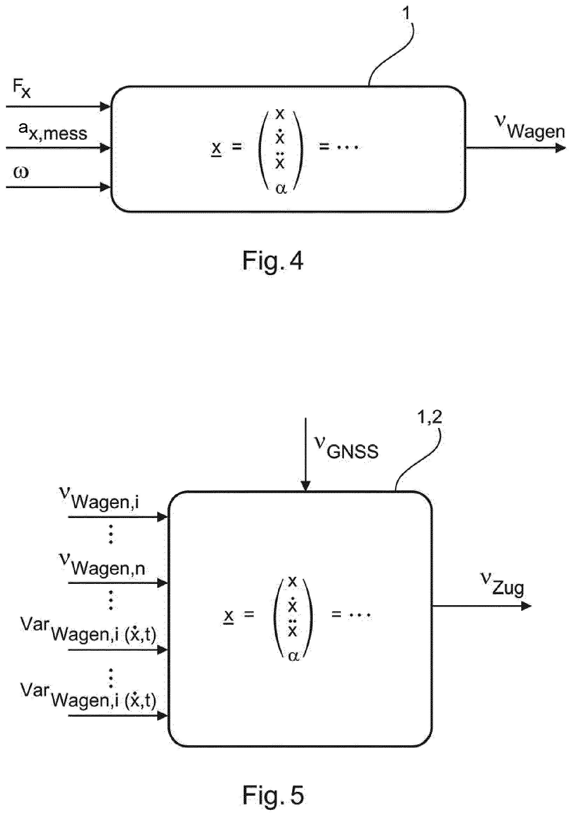

**Fig. 4** zeigt eine schematische Darstellung des Beobachtermodells 1 zur Bestimmung der lokalen Wagengeschwindigkeit v_{Wagen} mit einem Verfahren gemäß einer vierten Ausführungsform der Erfindung.

Das Verfahren gemäß der vierten Ausführungsform unterscheidet sich von den Verfahren gemäß der ersten oder dritten Ausführungsform darin, dass die Eingangsgrößen zusätzlich messbare von außen in den Wagen eingeleitete Kräfte Fₓ enthalten.

Idealerweise werden alle bekannten Kräfte einbezogen, wobei alle weiteren Kräfte im Ansatz einer Störgrößenbeobachtung aufgenommen werden. Insbesondere sind während einer Traktionsphase die messbaren eingeleiteten Kräfte einzubeziehen und während der Bremsphase sind die entsprechenden Bremskräfte einzubeziehen, welche im Bremssystem wirken. Diese werden beispielsweise durch pneumatische Drücke, Einsatz von adhäsionsunabhängigen Bremsen (z.B. Mg-Bremse) bzw. Bremsen, die die Bremskraft über das Rad auf der Schiene abstützen, (z.B. Radbremsen) und weiteren Einrichtungen, die antreibend oder bremsend auf den Wagen wirken (z.B. Retarder, elektrodynamische Bremse) und der daraus direkt oder indirekt ableitbaren Größen, hervorgerufen. In diesem Beobachtermodell werden optional weiterhin physikalische Zusammenhänge der Fahrwiderstände berücksichtigt, sowie deren Restfehler während einer Rollphase kompensiert.

**Fig. 5** zeigt eine schematische Darstellung eines Beobachtermodells 1, 2 für ein erfindungsgemäßes Verfahrens mit einer Sensordatenfusion für einzelne lokale Wagengeschwindigkeiten v_{Wagen,i} bis v_{Wagen,n} eines Zugs zur Ermittlung einer Zuggeschwindigkeit v_{Zug}.

Mehrere gemäß einem Verfahren der vorangegangenen Ausführungsformen bestimmte lokale Wagengeschwindigkeiten v_{Wagen,i} bis v_{Wagen,n} der Wagen des Zugs werden durch das Beobachtermodell 1, 2 gemittelt, um die Zuggeschwindigkeit v_{Zug} zu bestimmen.

Das Beobachtermodell 1, 2 zur Sensordatenfusion ist beispielsweise ein konventionelles Beobachtermodell 1, kann optional aber auch ein Kalman-Filter 2 sein. Es kann aber auch als einfache arithmetische Mittelung ausgebildet sein.

Optional wird eine Diagnosefunktion durch Überprüfen einer Plausibilität der einzelnen lokalen Wagengeschwindigkeiten v_{Wagen, i} durchgeführt. Nicht plausible lokale Wagengeschwindigkeiten v_{Wagen}, ᵢ werden für die Bestimmung der Zuggeschwindigkeit v_{Zug} ignoriert.

Dabei wird jeweils ein Kalman-Filter 2 als das Beobachtermodell für die Ermittlung der lokale Wagengeschwindigkeiten v_{Wagen,i} bis v_{Wagen,n} verwendet. Diese Kalman-Filter 2 bestimmen jeweils eine Varianz eines Messrauschens Var_{Wagen,i}(ẋ,t) bis Var_{Wagen,n}(ẋ,t) als Maß eines Vertrauens für die Überprüfung der Plausibilität der Zustandsgröße der lokalen Wagengeschwindigkeit v_{Wagen,i} bis vwa_{g}en,n der einzelnen Wagen. Die Varianz des jeweiligen Messrauschens Var_{Wagen,i}(ẋ,t) für die einzelnen lokalen Wagengeschwindigkeit v_{Wagen} wird in das regelungstechnische Beobachtermodell 1, 2 zur Sensordatenfusion für einzelne lokale Wagengeschwindigkeiten v_{Wagen,i} bis vwa_{g}en,n als Eingangsgröße eingegeben. Bei einer Unterschreitung eines Mindestmaßes des Vertrauens einer der lokalen Wagengeschwindigkeiten v_{Wagen} wird eine zugehörige Raddrehzahl als Eingangsgröße in den Kalman-Filter 2 entsprechend abgewertet oder nicht berücksichtigt.

Die durch das Beobachtermodell 1, 2 zur Sensordatenfusion für einzelne lokale Wagengeschwindigkeiten v_{Wagen,i} bis v_{Wagen,n} ermittelte Zuggeschwindigkeit wird mit einer aus anderen Quellen gebildeten Zuggeschwindigkeit abgeglichen, um weitere Diagnosefunktionen und Korrekturmaßnahmen umzusetzen. In dieser Ausführungsform wird dazu eine mittels eines Verortungssystems, z.B. mittels eines Satellitennavigationssystems, ermittelte Fahrzeuggeschwindigkeit v_{Verortung} in das Beobachtermodell 1, 2 zur Sensordatenfusion für einzelne lokale Wagengeschwindigkeiten v_{Wagen,i} bis vwa_{g}en,n eingegeben.

**Fig. 6** zeigt eine Prinzipskizze eines Aufbaus für das Verfahren gemäß der zweiten Ausführungsform der Erfindung.

Sensoren 3 erfassen jeweilige Messergebnisse, beispielsweise die Längsbeschleunigung, die Impulse oder Kräfte, und geben gegebenenfalls fehlerbehaftete Messsignale als Eingangsgrößen in den Kalman-Filter 2 ein. In dem Kalman-Filter 2 werden die fehlerbehafteten Messergebnisse mittels des Simulationsmodells verarbeitet und genaue Ausgangssignale bestimmt. Diese genauen Ausgangssignale werden dann für optimierte Algorithmen im Bahnbetrieb, beispielsweise dem Gleitschutz oder der Neigungserkennung, bereitgestellt und dort verarbeitet.

Alternativ oder zusätzlich können in einem der erfindungsgemäßen Verfahren folgende Varianten enthalten sein:
Ein Raddurchmesser wird als eine weitere Zustandsvariable definiert, wobei ein geringes Prozessrauschen vorliegt, da der Raddurchmesser annähernd konstant ist.

Damit kann ein Radverschleiß ohne weitere Messungen, beispielsweise über einen "extended Kalman filter", ermittelt werden.

Ein Schlupf in einem Rad-Schiene-Kontakt wird als weitere Zustandsgröße definiert. Der Impulsgeber misst dann eine Differenz aus der Geschwindigkeit und dem Schlupf. Eine sehr genaue Berechnung eines momentanen Schlupfs ist insbesondere in Verbindung mit einer genauen Positionsmessung möglich.

Eine Steigung oder ein Gefälle sind nicht von vorneherein bekannt, sondern werden als zusätzliche Störgröße aus dem Kalman-Filter 2 ermittelt.

Die Beschleunigung wird aus einem Positionssignal und einem Geschwindigkeitssignal fusioniert.

In den Kalman-Filter 2 mit dem Schlupf als eine der Zustandsgrößen wird ein vereinfachtes 2D-Simulationsmodell von einem Wagenkasten, dem Drehgestell und den Radsätzen integriert. Dadurch kann eine Radaufstandskraft als eine der Zustandsgrößen definiert werden.

Alle in der Beschreibung, den nachfolgenden Ansprüchen und der Zeichnung dargestellten Merkmale können sowohl einzeln als auch in beliebiger Kombination miteinander erfindungswesentlich sein, wobei die Erfindung durch die Ansprüche definiert wird. Insbesondere kann jedes Beobachtermodell dazu ausgebildet sein, zumindest einen der Zustände Geschwindigkeit, Beschleunigung, Driftgröße und Steigungswert zu ermitteln.

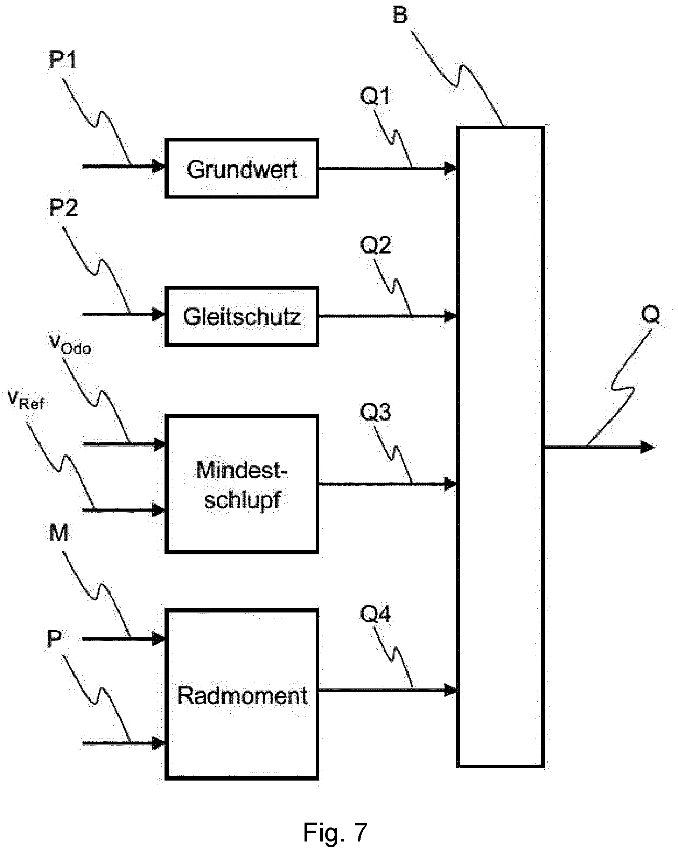

**Fig. 7** zeigt ein Schaubild einer Berechnung einer Qualität der Radgeschwindigkeit.

Es ist ein Berechnungsblock B gezeigt, der dazu ausgebildet ist, auf Basis von Eingangswerten Q1, Q2, Q3, Q4, die links in den Berechnungsblock B führen, eine Qualität Q der Radgeschwindigkeit v_{Odo} zu bestimmen. Der Berechnungsblock B gibt auf seiner rechten Seite schließlich die Qualität Q der Radgeschwindigkeit v_{Odo} aus.

Der Eingangswert Q1 entstammt einem Berechnungsblock, der eine Grundwertberechnung darstellt. Aufgrund von einem oder mehreren Parametern P1, die sich aus dem Betrieb des Wagens ergeben, wird hier ein Grundwert für die Qualität Q berechnet, der dann als Eingangswert Q1 an den Berechnungsblock B übermittelt wird. Beispielsweise kann ein Parameter P1 schlicht eine Information sein, ob ein Bremseingriff vorliegt, ob das entsprechende Rad angetrieben wird, oder ob es momentenfrei ist.

Ein weiterer Eingangswert Q2 entstammt einem Berechnungsblock, der speziell Parameter P2 aus dem Gleitschutz des Wagens verarbeitet. Wird beispielsweise die Gleitschutzfunktion des Wagens ausgelöst, so wird der Eingangswert Q2 entsprechend verändert, so dass anschließend der Berechnungsblock B einen Kennwert, der einer schlechteren Qualität Q entspricht, ausgibt.

Ein weiterer Eingangswert Q3 entstammt einem Berechnungsblock, der als Eingangsgrößen die Radgeschwindigkeit v_{Odo} sowie eine Referenzgeschwindigkeit v_{Ref} verarbeitet. Beispielsweise kann aus dem Vergleich der Radgeschwindigkeit v_{Odo} mit der Referenzgeschwindigkeit v_{Ref} ein Mindestschlupf ermittelt werden, der sich im Vergleich zu dem Wagen bei Null Schlupf und bei idealer Kraftübertragung zwischen Rad und Schiene einstellen würde. Ein solcher Mindestschlupf kann dann beispielsweise als Eingangswert Q3 in den Berechnungsblock B gegeben werden. Der Eingangswert Q3 kann jedoch auch ein abstrakter Wert sein.

Ein weiterer Eingangswert Q4 entstammt einem Berechnungsblock, der Momente und/oder Kräfte am Rad auswertet und daraus den Eingangswert Q4 bestimmt. Als Eingangsgrößen werden in diesem Beispiel die Größen M und P herangezogen. M repräsentiert dabei eine Größe, die einem Antriebsmoment das auf das Rad wirkt, entspricht, oder eine Größe, aus der das Antriebsmoment des Rades bestimmt werden kann. Beispielsweise kann es sich dabei um einen Strom eines Elektromotors handeln. Die Größe P repräsentiert eine Größe, die einem Bremsmoment das auf das Rad wirkt, entspricht, oder eine Größe, aus der das Bremsmoment des Rades bestimmt werden kann. Beispielsweise kann es sich dabei um einen Strom einer Wirbelstrombremse, um einen Bremsdruck o.ä. handeln. Aus einer solchen Größe M, P kann auch eine Kraft zwischen Schiene und Rad, die einer Antriebs- oder Bremskraft entspricht, bestimmt werden. Sind die Größen M, P relativ hoch, so kann ein Eingangswert Q4 bestimmt werden, der im Berechnungsblock B die Berechnung einer niedrigeren Qualität Q veranlasst, verglichen mit einem Zustand mit niedrigeren Größen M, P.

In einer speziellen Ausführungsform ist der Berechnungsblock B als Additionsoperator ausgebildet, der die Eingangswerte Q1, Q2, Q3, Q4 addiert und dadurch als Summe die Qualität Q bildet.

Die Verarbeitung der Eingangswerte Q1, Q2, Q3, Q4 kann ferner auch gewichtet erfolgen.

Darüber hinaus sind Ausführungsformen zur Qualitätsberechnung denkbar, die lediglich einen Teil der hier gezeigten Eingangswerte Q1, Q2, Q3, Q4 verarbeitet.

### BEZUGSZEICHENLISTE

- 1: Beobachtermodell
- 2: Kalman-Filter
- 3: Sensor
- aₓ: tatsächliche Beschleunigung in Längsrichtung des Wagens
- a_{x,mess}: gemessene Beschleunigung in Längsrichtung des Wagens
- a_{z,mess}: gemessene Beschleunigung in Hochrichtung des Wagens
- α: Steigungswert
- d: Driftgröße / Drift
- n: Drehzahl
- n_{Rad}: Raddrehzahl
- v_{Odo}: Radgeschwindigkeit
- Var(x,t): Varianz des Messrauschens der Zustandsgröße Geschwindigkeit
- Var_{Wagen,i}(ẋ,t): Varianz des Messrauschens der Zustandsgröße Geschwindigkeit des Wagens i
- v_{Wagen}: Geschwindigkeit des Wagens
- v_{Zug}: Zuggeschwindigkeit
- ω_{Achse}: Winkelgeschwindigkeit einer Achse
- B: Berechnungsblock
- M: Antriebsmoment repräsentierende Größe
- P: Bremsmoment repräsentierende Größe
- P1: Parameter
- P2: Parameter
- P3: Parameter
- P4: Parameter
- Q: Qualität
- Q1: Eingangswert
- Q2: Eingangswert
- Q3: Eingangswert
- Q4: Eingangswert
- v_{Ref}: Referenzgeschwindigkeit

## Patentansprüche

1. Verfahren zur Bestimmung einer Wagengeschwindigkeit (v_{Wagen}) eines Wagens mit den Schritten:
- Erfassen von in dem Wagen verfügbaren Sensordaten als eine jeweilige Eingangsgröße für ein Beobachtermodell (1, 2);
- Eingeben der Eingangsgrößen in das Beobachtermodell (1, 2);
- Durchführen einer kontinuierlichen Ermittlung der Wagengeschwindigkeit (v_{Wagen}) durch das Beobachtermodell (1, 2),
**dadurch gekennzeichnet, dass**
das Beobachtermodell (1, 2) eine Driftgröße (d) ermittelt, die als Zustandsgröße des Beobachtermodells (1, 2) ermittelt wird, und wobei die Driftgröße (d) als Betrag einer
- Differenz einer tatsächlichen Längsbeschleunigung (aₓ) des Wagens von einer gemessenen Längsbeschleunigung (a_{x,mess}), und/oder
- Differenz einer Längsbeschleunigung, die aus einer Drehzahl (n), vorzugsweise aus einer Raddrehzahl (n_{Rad}), bestimmt wird, von der gemessenen Längsbeschleunigung (a_{x,mess}), und/oder
- Differenz der Längsbeschleunigung, die aus der Drehzahl (n), vorzugsweise aus der Raddrehzahl (n_{Rad}), bestimmt wird, von der tatsächlichen Längsbeschleunigung (aₓ) definiert ist.

2. Verfahren gemäß Anspruch 1, wobei
die Sensordaten die gemessene Längsbeschleunigung (a_{x,mess}) des Wagens und/oder die Drehzahl (n) eines Wagenelements, dessen Drehzahl (n) proportional zu der Raddrehzahl (n_{Rad}) ist, enthalten und/oder wobei
die Eingangsgrößen messbare oder, vorzugsweise mittels eines Beobachtermodells, indirekt bestimmte vom Brems- oder Antriebssystem des Wagens eingeleitete Kräfte (Fₓ) enthalten.

3. Verfahren gemäß Anspruch 1 oder 2, wobei
das Beobachtermodell (1, 2) eine Geschwindigkeit und eine Beschleunigung des Wagens als Zustandsgrößen verwendet, wobei vorzugsweise die Geschwindigkeit die ermittelte Wagengeschwindigkeit (v_{Wagen}) ist und/oder die Beschleunigung eine Längsbeschleunigung des Wagens ist.

4. Verfahren gemäß einem der vorangegangenen Ansprüche, wobei
zumindest ein Teil der Sensordaten von an einer Fahrwerkseinheit, insbesondere einem Drehgestell, angeordneten Sensoren erfasst wird.

5. Verfahren gemäß einem der vorangegangenen Ansprüche, wobei die Sensordaten, insbesondere geschwindigkeitsrelevante, Messwerte
- eines Beschleunigungssensors,
- eines Neigungssensors
- einer Inertialmesseinheit,
- eines Drehzahlsensors,
- eines Bremsdrucksensors,
- eines Bremsstromsensors, und/oder
- eines Motors
enthalten.

6. Verfahren gemäß einem der vorangehenden Ansprüche, wobei
eine Driftdynamik durch Ermittlung einer zeitlichen Änderungsrate der Driftgröße (d), vorzugsweise durch das Beobachtermodell (1, 2), ermittelt wird, wobei bevorzugt der Betrag der Driftdynamik gegen vorbestimmte Maximalwerte verglichen wird und weiter vorzugsweise bei Überschreiten der vorbestimmten Maximalwerte durch den Betrag der Driftdynamik auf einen fehlerhaften Bereitstellungsvorgang der Drehzahl (n), insbesondere der Raddrehzahl (n_{Rad}), geschlossen wird, und die vorbestimmten Maximalwerte vorzugsweise Steigungs- und Neigungsänderungen über einem Streckenverlauf, Einbau- und Kalibrierfehler der verwendeten Beschleunigungssensoren und übliche Beschleunigungs- und Verzögerungsdynamiken des Zuges beinhalten.

7. Verfahren gemäß einem der vorangegangenen Ansprüche, wobei
eine Gewichtung zumindest einer der Eingangsgrößen kontinuierlich auf Basis eines Bewertungskriteriums erfolgt, um den Einfluss dieser Eingangsgröße in dem Beobachtermodell (1, 2) anzupassen.

8. Verfahren gemäß einem der vorangegangenen Ansprüche, wobei
ein Kalman-Filter (2) als das Beobachtermodell (1, 2) verwendet wird, und
vorzugsweise eine Varianz eines Messrauschens zumindest einer der Eingangsgrößen einer Eingangsgröße des Beobachtermodells (1, 2) angepasst wird.

9. Verfahren gemäß Anspruch 7 oder 8, wobei
die Anpassung des Wertes der Varianz des Messrauschens zumindest einer der Eingangsgrößen oder die Gewichtung zumindest einer der Eingangsgrößen in Abhängigkeit einer Kenngröße erfolgt, die sich aus Antrieb- und/oder Bremsvorgängen des Wagens ergibt.

10. Verfahren gemäß einem der vorangehenden Ansprüche, wobei
eine der Eingangsgrößen des Beobachtermodells (1, 2) die Raddrehzahl (n_{Rad}) ist oder aus einer Raddrehzahl (n_{Rad}) bestimmt wird, wobei vorzugsweise aus der Raddrehzahl (n_{Rad}) eine Radgeschwindigkeit (v_{Odo}) bestimmt wird und die Radgeschwindigkeit (v_{Odo}) besonders bevorzugt ebenfalls eine der Eingangsgrößen des Beobachtermodells (1, 2) ist.

11. Verfahren gemäß einem der vorangehenden Ansprüche mit den Merkmalen gemäß Anspruch 2, wobei
ein Steigungswert (a) bestimmt wird, der bevorzugt eine der Eingangsgrößen des Beobachtermodells (1, 2) darstellt, wobei der Steigungswert (α) vorzugsweise gemessen und/oder abgeschätzt und/oder aus einer Datenbasis bestimmt wird, wobei besonders bevorzugt der Steigungswert (a) zur Korrektur der gemessenen Längsbeschleunigung (a_{x,mess}) verwendet wird.

12. Verfahren gemäß einem der vorangehenden Ansprüche , wobei
der Wagen eine Längsrichtung aufweist und eine Vertikalbeschleunigung (a_{z,mess}) in einer Hochrichtung des Wagens senkrecht zu der Längsrichtung in einer vertikalen Ebene erfasst wird, und die gemessene Längsbeschleunigung (a_{x,mess}) durch die Vertikalbeschleunigung (a_{z,mess}) korrigiert wird und/oder die Vertikalbeschleunigung (a_{z,mess}) eine Eingangsgröße des Beobachtermodells (1, 2) ist, wobei vorzugsweise eine Korrektur der Längsbeschleunigung (a_{x,mess}) durch die Vertikalbeschleunigung (a_{z,mess}) im Beobachtermodell (1, 2) erfolgt und/oder wobei
eine Fahrzeugneigung um eine horizontale Achse senkrecht zu der Längsachse und senkrecht zu der Hochachse als eine der Zustandsgrößen des Beobachtermodells (1, 2) verwendet wird, und
für eine Bestimmung der Fahrzeugneigung erforderliche Messgrößen als Eingangsgrößen in das Beobachtermodell (1,2) eingegeben werden, wobei insbesondere die Vertikalbeschleunigung (a_{z,mess}) eingegeben wird.

13. Verfahren gemäß einem der Ansprüche 10 bis 12, aufweisend einen weiteren Schritt:
- Bestimmen einer Qualität der ermittelten Radgeschwindigkeit (v_{Odo}), wobei
die Qualität vorzugsweise als Kennwert unter Berücksichtigung mindestens einer der folgenden Größen gebildet wird:
- einem Bremsdruck und/oder einer Zuspannkraft einer Bremse, die zur Bremsung des Rades ausgebildet ist;
- einem Strom und/oder einer Spannung einer Vorrichtung, die dazu ausgebildet ist, dem Rad ein Moment aufzuprägen;
- einem auf das Rad aufgebrachten Antriebs- oder Bremsmoment;
- einer Gewichtskraft des Wagens, welche durch eine Lasterfassung ermittelt wird
- einem Radschlupf des Rades;
- einer Referenzgeschwindigkeit (v_{Ref}) und/oder der Wagengeschwindigkeit (Vwagen);
- einem Reibwert zwischen dem Rad und einer Oberfläche auf der das Rad rollt;
- der erfassten Beschleunigung (aₘₑₛₛ);
- einem auf das Rad aufgebrachten Antriebs- oder Bremsmoment;
- einer globalen Fahrzeuggeschwindigkeit;
- einer Information, ob ein Gleitschutzeingriff vorliegt;
- einer Information, ob ein Bremseingriff vorliegt;
- einer Information, ob das entsprechende Rad angetrieben wird.

14. Verfahren gemäß Anspruch 13, wobei
die Varianz des Messrauschens zumindest einer der Eingangsgrößen und/oder die Gewichtung zumindest einer der Eingangsgrößen durch Überschreiten oder Unterschreiten eines Grenzwertes durch die Qualität, insbesondere durch den Kennwert, beeinflusst wird.

15. Verfahren zum Bestimmen einer Zuggeschwindigkeit (v_{Zug}) mit dem Schritt:
- Bestimmen von mindestens einer Wagengeschwindigkeit (v_{Wagen}) eines Wagens, der einem Zug mit mindestens einem Wagen angehört nach dem Verfahren eines der Ansprüche 1 bis 14, und
- Bestimmen einer Zuggeschwindigkeit (v_{Zug}) aus der mindestens einer Wagengeschwindigkeit (v_{Wagen}), vorzugsweise durch Mittelung der mindestens einen Wagengeschwindigkeit (v_{Wagen});
- vorzugsweise Durchführen einer Plausibilitätsüberprüfung der mindestens einen Wagengeschwindigkeit (v_{Wagen}); und
- vorzugsweise Ignorieren von nicht plausiblen Wagengeschwindigkeiten (v_{Wagen}) für die Bestimmung der Zuggeschwindigkeit (v_{Zug}), und/oder
- vorzugsweise Ignorieren von Wagengeschwindigkeiten (v_{Wagen}), die auf Basis von Radgeschwindigkeiten (v_{Odo}) mit einer Qualität bestimmt wurden, die unter einem vorbestimmten Qualitätsniveau liegen.

16. Verfahren gemäß Anspruch 15, wobei
ein Kalman-Filter als das Beobachtermodell für die Ermittlung der lokalen Wagengeschwindigkeit (v_{Wagen}) verwendet wird,
eine Varianz (Var_{Wagen,i}(ẋ,t)) eines Messrauschens in dem Kalman-Filter als Maß eines Vertrauens für die Überprüfung der Plausibilität der lokalen Wagengeschwindigkeit (v_{Wagen}) bestimmt wird, und
bei einer Unterschreitung eines Mindestmaßes des Vertrauens einer der lokalen Wagengeschwindigkeiten (v_{Wagen}), die zugehörige Raddrehzahl (n_{Rad}) oder die zugehörige Radgeschwindigeit (v_{Odo})als Eingangsgröße ignoriert wird.

17. Verfahren gemäß einem der Ansprüche 15 oder 16, mit dem Schritt:
- Abgleichen oder Korrigieren der bestimmten Zuggeschwindigkeit (v_{Zug}) mit einer aus anderen Quellen gebildeten Zuggeschwindigkeit (v_{Zug}), wobei
eine andere Quelle vorzugsweise eine Radarmessung oder eine GPS-Messung ist, wobei
das Abgleichen oder Korrigieren vorzugsweise mittels Fusion unter Einsatz eines Kalman-Filters erfolgt.

18. Vorrichtung zur Bestimmung einer Wagengeschwindigkeit (v_{Wagen}) oder einer Zuggeschwindigkeit (v_{Zug}), die dazu ausgebildet ist, das Verfahren nach einem der Ansprüche 1 bis 17 durchzuführen.

19. Fahrzeug, insbesondere Schienenfahrzeug, insbesondere aufweisend mindestens einen Wagen, wobei das Fahrzeug zur Durchführung des Verfahrens nach einem der Ansprüche 1 bis 17 ausgebildet ist, und/oder wobei das Fahrzeug eine Vorrichtung nach Anspruch 18 aufweist.

20. Computerprogrammprodukt mit Codemitteln, die auf einem maschinenlesbaren Träger gespeichert sind und die eine Datenverarbeitungsvorrichtung, vorzugsweise eine Vorrichtung nach Anspruch 18, dazu veranlassen, das Verfahren nach einem der Ansprüche 1 bis 17 durchzuführen, wenn die Codemittel auf der Datenverarbeitungsvorrichtung ausgeführt werden.

## Claims

1. Method for determining a carriage speed (v_{carriage}) of a carriage with the steps of:
- Acquiring sensor data available in the carriage as a respective input variable for an observer model (1, 2);
- Inputting the input variables into the observer model (1, 2);
- Performing a continuous determining of the carriage speed (v_{carriage}) by the observer model (1, 2),
**characterised in that**
the observer model (1, 2) determines a drift variable (d), which is determined as the state variable of the observer model (1, 2), and wherein the drift variable (d) is defined as a value of a
- difference of an actual longitudinal acceleration (aₓ) of the carriage from a measured longitudinal acceleration (a_{x,measured}), and/or
- difference of a longitudinal acceleration, which is determined from a rotational speed (n), preferably from a wheel rotational speed (n_{wheel}), from the measured longitudinal acceleration (a_{x,measured}), and/or
- difference of the longitudinal acceleration, which is determined from the rotational speed (n), preferably from the wheel rotational speed (n_{wheel}), from the actual longitudinal acceleration (aₓ).

2. Method according to claim 1, wherein
the sensor data contain the measured longitudinal acceleration (a_{x,measured}) of the carriage and/or the rotational speed (n) of a carriage element, the rotational speed (n) of which is proportional to the wheel rotational speed (n_{wheel}) and/or wherein
the input variables contain measurable forces or forces (Fₓ) introduced by the braking or drive system of the carriage preferably determined indirectly by means of an observer model.

3. Method according to claim 1 or 2, wherein
the observer model (1, 2) uses a speed and an acceleration of the carriage as state variables, wherein the speed is preferably the determined carriage speed (v_{carriage}) and/or the acceleration is a longitudinal acceleration of the carriage.

4. Method according to any one of the preceding claims, wherein
at least one part of the sensor data is acquired by sensors arranged on a chassis unit, in particular a bogie.

5. Method according to any one of the preceding claims, wherein
the sensor data, in particular speed-related measured values, contain
- an acceleration sensor,
- an inclination sensor
- an inertial measurement unit,
- a rotational speed sensor,
- a brake pressure sensor,
- a braking current sensor, and/or
- an engine

6. Method according to any one of the preceding claims, wherein
a drift dynamic is determined by determining a rate of change over time of the drift variable (d), preferably by the observer model (1, 2), wherein the value of the drift dynamic is preferably compared to predetermined maximum values and further preferably, when the predetermined maximum values are exceeded by the value of the drift dynamic, a faulty retrieval process of the rotational speed (n), in particular of the wheel rotational speed (n_{wheel}), is assumed, and the predetermined maximum values preferably include gradient and inclination changes over a route, installation and calibration errors affecting the acceleration sensors used and normal acceleration and deceleration dynamics of the train.

7. Method according to any one of the preceding claims, wherein
a weighting of at least one of the input variables occurs continuously on the basis of an evaluation criterion, in order to adapt the influence of this input variable in the observer model (1, 2).

8. Method according to any one of the preceding claims, wherein
a Kalman filter (2) is used as the observer model (1, 2), and
a variance of a measuring noise is preferably adapted to at least one of the input variables of an input variable of the observer model (1, 2).

9. Method according to claim 7 or 8, wherein
adaptation of the value of the variance of the measuring noise is performed for at least one of the input variables or weighting occurs for at least one of the input variables as a function of a parameter, arising from the carriage's drive and/or braking processes.

10. Method according to any one of the preceding claims, wherein
one of the input variables of the observer model (1, 2) is the wheel rotational speed (n_{wheel}) or is determined from a wheel rotational speed (n_{wheel}), wherein a wheel speed (n_{odo}) is preferably determined from the wheel rotational speed (n_{wheel}) and the wheel speed (v_{odo}) is most preferably also one of the input variables of the observer model (1, 2).

11. Method according to any of the preceding claims, with the features according to claim 2, wherein
a gradient value (a) is determined, which preferably represents one of the input variables of the observer model (1, 2), wherein the gradient value (a) is preferably measured and/or estimated and/or determined from a database, wherein the gradient value (a) is most preferably used to correct the measured longitudinal acceleration (a_{x,measured}).

12. Method according to any one of the preceding claims, wherein
the carriage has a longitudinal direction and a vertical acceleration (a_{z,measured}) is determined in a vertical direction of the carriage perpendicular to the longitudinal direction in a vertical plane, and the measured longitudinal acceleration (a_{x,measured}) is corrected by the vertical acceleration (a_{z,measured}) and/or the vertical acceleration (a_{z,measured}) is an input variable of the observer model (1, 2), wherein a correction of the longitudinal acceleration (a_{x,measured}) preferably occurs through the vertical acceleration (a_{z,measured}) in the observer model (1, 2) and/or wherein
a vehicle inclination about a horizontal axis perpendicular to the longitudinal axis and perpendicular to the vertical axis is used as one of the state variables of the observer model (1, 2), and
measured variables necessary to determine the vehicle inclination are input as input variables into the observer model (1,2), wherein the vertical acceleration (a_{z,measured}), in particular, is input.

13. Method according to any of claims 10 to 12, having a further step of:
- determining a quality of the determined wheel speed (v_{odo}), wherein
- the quality is preferably formed as a characteristic value taking account of at least one of the following variables:
- a brake pressure and/or an application force of a brake, which is designed to brake the wheel,
- a current and/or a voltage of a device, which is designed to apply a torque to the wheel,
- a drive or braking torque applied to the wheel,
- a weight force of the carriage, which is determined by load detection
- a wheel slip of the wheel,
- a reference speed (v_{Ref}) and/or the carriage speed (v_{carriage}),
- a coefficient of friction between the wheel and a surface on which the wheel rolls,
- the detected acceleration (a_{measured}),
- a drive or braking torque applied to the wheel,
- a global vehicle speed,
- information on whether anti-skid protection has been applied,
- information on whether the brakes have been applied,
- information on whether the corresponding wheel is driven.

14. Method according to claim 13, wherein
the variance of the measuring noise for at least one of the input variables and/or the weighting for at least one of the input variables is influenced by the quality, in particular the characteristic value, exceeding or falling below a threshold.

15. Method for determining a train speed (vₜᵣₐᵢₙ) with the steps of:
- Determining at least one carriage speed (v_{carriage}) of a carriage, which belongs to a train with at least one carriage according to the method of any one of claims 1 to 14, and
- Determining a train speed (vₜᵣₐᵢₙ) from the at least one carriage speed (v_{carriage}), preferably by averaging the at least one carriage speed (v_{carriage}),
- preferably performing a plausibility check of the at least one carriage speed (v_{carriage}), and
- preferably disregrading non-plausible carriage speeds (v_{carriage}) for determining the train speed (vₜᵣₐᵢₙ), and/or
- preferably disregarding carriage speeds (v_{carriage}), which have been determined on the basis of wheel speeds (v_{odo}) with a quality below a predetermined quality level.

16. Method according to claim 15, wherein
a Kalman filter is used as the observer model for determining the local carriage speed (v_{carriage}),
a variance (Var_{carriage,i}(x,t)) of a measuring noise in the Kalman filter is determined as a measure of confidence for checking the plausibility of a local carriage speed (v_{carriage}), and
when a minimum measure of confidence of one of the local carriage speeds (v_{carriage}) is not reached, the corresponding wheel rotational speed (n_{wheel}) or the corresponding wheel speed (v_{odo}) is disregarded as an input variable.

17. Method according to any of claims 15 or 16, with the step of:
- Comparing or correcting the determined train speed (vₜᵣₐᵢₙ) with a train speed (vₜᵣₐᵢₙ) formed from other sources, wherein
another source is preferably a radar measurement or a GPS measurement, wherein
the comparing or correcting preferably occurs by means of merging using a Kalman filter.

18. Device for determining a carriage speed (v_{carriage}) or a train speed (vₜᵣₐᵢₙ), which is designed to perform the method according to any one of claims 1 to 17.

19. Vehicle, in particular a rail vehicle, in particular having at least one carriage, wherein the vehicle is designed to perform the method according to any one of claims 1 to 17, and/or wherein the vehicle has a device according to claim 18.

20. Computer program product with code means, which are stored on a machine-readable medium and which prompt a data processing device, preferably a device according to claim 18, to perform the method according to any one of claims 1 to 17, when the code means are executed on the data processing device.

## Revendications

1. Procédé de détermination d'une vitesse de voiture (v_{Voiture}) d'une voiture avec les étapes consistant à :
- acquérir de données de capteur disponibles dans la voiture comme grandeur d'entrée respective pour un modèle d'observateur (1, 2) ;
- introduire des grandeurs d'entrée dans le modèle d'observateur (1, 2) ;
- mettre en oeuvre d'une détermination continue de la vitesse de voiture (v_{Voiture}) par le modèle d'observateur (1, 2),
**caractérisé en ce que**
le modèle d'observateur (1, 2) détermine une grandeur de dérive (d) qui est déterminée comme grandeur d'état du modèle d'observateur (1, 2), et dans lequel la grandeur de dérive (d) est définie comme montant d'une
- différence entre une accélération longitudinale réelle (aₓ) de la voiture et une accélération longitudinale mesurée (a_{x,mesurée}), et/ou
- différence entre une accélération longitudinale qui est déterminée à partir d'une vitesse de rotation (n), de préférence à partir d'une vitesse de rotation de roue (n_{Roue}), et l'accélération longitudinale mesurée (a_{x,mesurée}), et/ou
- différence entre l'accélération longitudinale qui est déterminée à partir de la vitesse de rotation (n), de préférence à partir de la vitesse de rotation de roue (n_{Roue}), et l'accélération longitudinale réelle (aₓ).

2. Procédé selon la revendication 1, dans lequel
les données de capteur contiennent l'accélération longitudinale mesurée (a_{x,mesurée}) de la voiture et/ou la vitesse de rotation (n) d'un élément de voiture dont la vitesse de rotation (n) est proportionnelle à la vitesse de rotation de roue (n_{Roue}), et/ou dans lequel
les grandeurs d'entrée contiennent des forces (Fₓ) mesurables ou, de préférence au moyen d'un modèle d'observateur, déterminées indirectement par le système de freinage ou d'entraînement de la voiture.

3. Procédé selon la revendication 1 ou 2, dans lequel
le modèle d'observateur (1, 2) utilise une vitesse et une accélération de la voiture comme grandeurs d'état, dans lequel la vitesse est de préférence la vitesse de voiture déterminée (v_{Voiture}) et/ou l'accélération est une accélération longitudinale de la voiture.

4. Procédé selon l'une quelconque des revendications précédentes, dans lequel
au moins une partie des données de capteur est acquise par des capteurs disposés sur une unité de châssis, en particulier un bogie.

5. Procédé selon l'une quelconque des revendications précédentes, dans lequel
les données de capteur contiennent des valeurs de mesure, en particulier relatives à la vitesse,
- d'un capteur d'accélération,
- d'un capteur d'inclinaison
- d'une unité de mesure inertielle,
- d'un capteur de vitesse de rotation,
- d'un capteur de pression de freinage,
- d'un capteur de courant de freinage, et/ou
- d'un moteur.

6. Procédé selon l'une quelconque des revendications précédentes, dans lequel
une dynamique de dérive est déterminée par la détermination d'un taux de variation dans le temps de la grandeur de dérive (d), de préférence par le modèle d'observateur (1, 2), dans lequel la valeur de la dynamique de dérive est de préférence comparé à des valeurs maximales prédéterminées et, plus préférentiellement lorsque les valeurs maximales prédéterminées sont dépassées par la valeur de la dynamique de dérive, un processus de mise à disposition erroné de la vitesse de rotation (n), en particulier de la vitesse de rotation de roue (n_{Roue}), est déduit, et les valeurs maximales prédéterminées contiennent de préférence des variations de pente et d'inclinaison sur un parcours, des erreurs de montage et de calibrage des capteurs d'accélération utilisés et des dynamiques d'accélération et de décélération habituelles du train.

7. Procédé selon l'une quelconque des revendications précédentes, dans lequel
une pondération d'au moins une des grandeurs d'entrée est continuellement effectuée sur la base d'un critère d'évaluation pour adapter l'influence de cette grandeur d'entrée dans le modèle d'observateur (1, 2).

8. Procédé selon l'une quelconque des revendications précédentes, dans lequel
un filtre de Kalman (2) est utilisé comme modèle d'observateur (1, 2), et
de préférence une variance d'un bruit de mesure d'au moins une des grandeurs d'entrée est adaptée à une grandeur d'entrée du modèle d'observateur (1, 2).

9. Procédé selon la revendication 7 ou 8, dans lequel
l'adaptation de la valeur de la variance du bruit de mesure d'au moins une des grandeurs d'entrée ou la pondération d'au moins une des grandeurs d'entrée est effectuée en fonction d'un paramètre qui résulte de processus d'entraînement et/ou de freinage de la voiture.

10. Procédé selon l'une quelconque des revendications précédentes, dans lequel
une des grandeurs d'entrée du modèle d'observateur (1, 2) est la vitesse de rotation de roue (n_{Roue}) ou est déterminée à partir d'une vitesse de rotation de roue (n_{Roue}), dans lequel une vitesse de roue (v_{Odo}) est de préférence déterminée à partir de la vitesse de rotation de roue (n_{Roue}) et la vitesse de roue (v_{Odo}) est le plus préférentiellement également une des grandeurs d'entrée du modèle d'observateur (1, 2).

11. Procédé selon l'une quelconque des revendications précédentes avec les caractéristiques selon la revendication 2, dans lequel
une valeur de pente (a) est déterminée, qui représente de préférence une des grandeurs d'entrée du modèle d'observateur (1, 2), dans lequel la valeur de pente (α) est de préférence mesurée et/ou estimée et/ou déterminée à partir d'une base de données, dans lequel la valeur de pente (a) est le plus préférentiellement utilisée pour la correction de l'accélération longitudinale (a_{x,mesurée}) mesurée.

12. Procédé selon l'une quelconque des revendications précédentes, dans lequel
la voiture présente une direction longitudinale et une accélération verticale (a_{z,mesurée}) est acquise dans une direction verticale de la voiture perpendiculaire à la direction longitudinale dans un plan vertical, et l'accélération longitudinale mesurée (a_{x,mesurée}) est corrigée par l'accélération verticale (a_{z,mesurée}) et/ou l'accélération verticale (a_{z,mesurée}) est une grandeur d'entrée du modèle d'observateur (1, 2), dans lequel une correction de l'accélération longitudinale (a_{x,mesurée}) par l'accélération verticale (a_{z,mesurée}) est de préférence effectuée dans le modèle d'observateur (1, 2) et/ou dans lequel
une inclinaison de véhicule autour d'un axe horizontal perpendiculaire à l'axe longitudinal et perpendiculaire à l'axe vertical est utilisée comme une des grandeurs d'état du modèle d'observateur (1, 2), et
des grandeurs de mesure nécessaires pour une détermination de l'inclinaison de véhicule sont entrées comme grandeurs d'entrée dans le modèle d'observateur (1, 2), dans lequel l'accélération verticale (a_{z,mesurée}) est entrée en particulier.

13. Procédé selon l'une quelconque des revendications 10 à 12, présentant une étape supplémentaire consistant à :
- déterminer une qualité de la vitesse de roue déterminée (v_{Odo}), dans lequel
la qualité est de préférence formée comme valeur caractéristique en tenant compte au moins d'une des grandeurs suivantes :
- une pression de freinage et/ou une force de serrage d'un frein qui est conçu pour le freinage de la roue ;
- un courant et/ou une tension d'un dispositif qui est conçu pour appliquer un couple à la roue ;
- un couple d'entraînement ou de freinage appliqué à la roue ;
- une force de poids de la voiture qui est déterminée par une détection de charge
- un patinage de roue de la roue ;
- une vitesse de référence (v_{Réf}) et/ou la vitesse de la voiture (Vᵥₒᵢₜᵤᵣₑ) ;
- un coefficient de frottement entre la roue et une surface sur laquelle la roue roule ;
- l'accélération détectée (a_{mesurée}) ;
- un couple d'entraînement ou de freinage appliqué à la roue ;
- une vitesse de véhicule globale ;
- une information sur l'application ou non d'une protection antidérapante ;
- une information sur l'application ou non d'un freinage ;
- une information sur l'entraînement ou non de la roue correspondante.

14. Procédé selon la revendication 13, dans lequel
la variance du bruit de mesure d'au moins une des grandeurs d'entrée et/ou la pondération d'au moins une des grandeurs d'entrée est influencée par la qualité, en particulier par la valeur caractéristique, qui dépasse ou n'atteint pas une valeur limite.

15. Procédé de détermination d'une vitesse de train (V_{Train}) avec l'étape consistant à :
- déterminer au moins une vitesse de voiture (v_{Voiture}) d'une voiture qui appartient à un train avec au moins une voiture selon le procédé d'une des revendications 1 à 14, et
- déterminer une vitesse de train (V_{Train}) à partir de la au moins une vitesse de voiture (v_{Voiture}), de préférence en faisant la moyenne de la au moins une vitesse de voiture (V_{Voiture}) ;
- de préférence effectuer un contrôle de plausibilité de la au moins une vitesse de voiture (v_{Voiture}) ; et
- de préférence ignorer les vitesses de voiture (v_{Voiture}) non plausibles pour la détermination de la vitesse de train (v_{Train}), et/ou
- de préférence ignorer les vitesses de voiture (v_{Voiture}) qui sont déterminées sur la base de vitesses de roue (v_{Odo}) avec une qualité qui se situe sous un niveau de qualité prédéterminé.

16. Procédé selon la revendication 15, dans lequel
un filtre de Kalman est utilisé comme modèle d'observateur pour déterminer la vitesse de voiture (v_{Voiture}) locale,
une variance (Var_{voiture,i}(x,t)) d'un bruit de mesure dans le filtre de Kalman est déterminée comme mesure d'une confiance pour le contrôle de la plausibilité de la vitesse de voiture (v_{Voiture}) locale, et
si une mesure minimale de la confiance accordée à une des vitesses de voiture (v_{Voiture}) locales n'est pas atteinte, la vitesse de rotation de roue (n_{Roue}) correspondante ou la vitesse de roue (v_{Odo}) correspondante est ignorée comme grandeur d'entrée.

17. Procédé selon l'une quelconque des revendications 15 ou 16, avec l'étape consistant à :
- comparer ou corriger la vitesse de train (V_{Train}) déterminée à une vitesse de train (V_{Train}) formée à partir d'autres sources, dans lequel
une autre source est de préférence une mesure radar ou une mesure GPS, dans lequel
la comparaison ou la correction s'effectue de préférence par fusion en utilisant un filtre de Kalman.

18. Dispositif pour déterminer une vitesse de voiture (v_{Voiture}) ou une vitesse de train (V_{Train}) qui est conçu pour mettre en oeuvre le procédé selon l'une quelconque des revendications 1à 17.

19. Véhicule, en particulier véhicule ferroviaire, en particulier présentant au moins une voiture, dans lequel le véhicule est conçu pour mettre en oeuvre le procédé selon l'une quelconque des revendications 1 à 17, et/ou le véhicule présente un dispositif selon la revendication 18.

20. Produit de programme informatique avec des moyens de code qui sont stockés sur un support lisible par machine et qui amènent un dispositif de traitement de données, de préférence un dispositif selon la revendication 18, à mettre en oeuvre le procédé selon l'une quelconque des revendications 1 à 17 lorsque les moyens de code sont exécutés sur le dispositif de traitement de données.
